# EUROPÄISCHE PATENTANMELDUNG

(11) **EP 3 202 700 A1**
(43) Veröffentlichungstag der Anmeldung: **09.08.2017**
(21) Anmeldenummer: 17152208.9
(22) Anmeldetag: 19.01.2017
(51) Int. Cl.: B66C 13/40, G08C 17/02, G05B 15/00, G05B 19/04

(54) **STEUERUNGSSYSTEM FÜR EINEN KRAN**

(30) Priorität: 04.02.2016 DE 102016201713
(71) Anmelder: Terex Global GmbH, 8200 Schaffhausen (CH)
(72) Erfinder: Wernicke, Frank, 66497 Stambach (DE); Henzelmann, Uwe, 66957 Eppenbrunn (DE)
(74) Vertreter: Moser Götze & Partner Patentanwälte mbB

(57) **Zusammenfassung**

Ein Steuerungssystem für einen Kran (2) umfasst ein mobiles Endgerät (3) mit einer vorinstallierten Anwendungssoftware (4) zum Eingeben eines Steuerungsbefehls für einen Kran (2) und einem Sendemodul (5) zum Senden des Steuerungsbefehls, eine Steuerungseinheit (6) mit einem Empfangsmodul (7), das zum Empfangen des Steuerungsbefehls geeignet ist und mit dem mobilen Endgerät (3) in Signalverbindung bringbar ist, wobei die Signalverbindung drahtlos ist, und mindestens ein mit der Steuerungseinheit (6) in Signalverbindung stehendes Kranmodul (8) zum Ausführen des Steuerungsbefehls.

## Beschreibung

Der Inhalt der deutschen Patentanmeldung DE 10 2016 201 713.6 wird durch Bezugnahme hierin aufgenommen.

Die Erfindung betrifft ein Steuerungssystem für einen Kran und einen Kran mit einem derartigen Steuerungssystem sowie ein Verfahren zum Steuern eines Krans.

Ein Fernsteuerungssystem ist aus der WO 2014/041022 A2 und der DE 101 29 189 A1 bekannt. Ein für einen Kran vorgesehenes Fernsteuerungssystem ist aus der DE 20 2006 017 729 U1 und der EP 2 489 625 A1 bekannt. Zum Bedienen des Fernsteuerungssystems ist eine spezielle Bedieneinheit erforderlich, die insbesondere auf die zu bedienende Arbeitsmaschine abgestimmt ist.

Eine Aufgabe der vorliegenden Erfindung besteht darin, ein Steuerungssystem bereitzustellen, das die Bedienung des Krans vereinfacht und die Sicherheit erhöht.

Diese Aufgabe wird mit einem Steuerungssystem gemäß Anspruch 1 gelöst.

Das erfindungsgemäße Steuerungssystem für einen Kran umfasst ein mobiles Endgerät mit einer vorinstallierten Anwendungssoftware zum Eingeben eines Steuerungsbefehls für einen Kran und einem Sendemodul zum Senden des Steuerungsbefehls, eine Steuerungseinheit mit einem Empfangsmodul, das zum Empfangen des Steuerungsbefehls geeignet ist und mit dem mobilen Endgerät in Signalverbindung bringbar ist, wobei die Signalverbindung drahtlos ist, und mindestens ein mit der Steuerungseinheit in Signalverbindung stehendes Kranmodul zum Ausführen des Steuerungsbefehls.

Ein mobiles Endgerät ist insbesondere ein elektronisches Endgerät für mobile, netzunabhängige Kommunikation, insbesondere zur Daten-, Sprach- und/oder Bildkommunikation sowie Navigation. Das mobile Endgerät ist universell einsetzbar, insbesondere zur Telekommunikation und Datenverarbeitung. Mobile Endgeräte sind weit verbreitet. Durch die Installation der Anwendungssoftware kann das mobile Endgerät zur Kransteuerung erschlossen werden. Es ist nicht erforderlich, ein spezielles Bedienpanel anzuschaffen. Die Investitionen sind reduziert. Das mobile Endgerät ist dem Kranbediener vertraut. Die Akzeptanz ist erhöht. Der Einsatz des mobilen Endgeräts ist nicht auf die Steuerung eines Kranes beschränkt.

Insbesondere wurde erkannt, dass es möglich ist, eine spezielle Bedieneinheit durch ein mobiles Endgerät zu ersetzen. Eine Bedieneinheit mit einer Schnittstelle für einen tragbaren Computer gemäß der EP 2 489 625 A1 ist entbehrlich. Mobile Endgeräte sind heute zahlreich verfügbar. Durch die vorinstallierte Anwendungssoftware, eine sogenannten Applikation, kurz App, kann ein Kranbediener das mobile Endgerät zur Steuerung des Krans vorbereiten. Insbesondere kann ein handelsübliches Smartphone mit der installierten App zur Steuerung des Krans genutzt werden. Insbesondere ist die vorinstallierte Software benutzerfreundlich ausgeführt und weist Benutzeroberflächen auf, die dem Kranbediener eingänglich sind. Spezialkenntnisse zur Bedienung des Krans hinsichtlich der Steuerungssoftware sind nicht erforderlich. Die vorinstallierte Software ist intuitiv bedienbar. Der Komponentenaufwand für die Kransteuerung ist durch das Wegfallen der speziellen Bedieneinheit reduziert. Bei einem kurzzeitigen Ausfall des mobilen Endgeräts kann dieses durch ein anderes, verfügbares mobiles Endgerät mit vorinstallierter Software ersetzt werden. Stillstandzeiten des Krans infolge einer nicht vorhandenen Bedieneinheit sind reduziert. Die Bedienperson ist nicht an einen Bedienplatz gebunden und kann einen optimalen Bedienplatz aufsuchen, wodurch die Sicherheit des Kranbetriebes erhöht wird.

Vorteilhafterweise wird der in der Anwendungssoftware eingegebene Steuerungsbefehl durch das mindestens eine Kranmodul ausgeführt, wodurch der Steuerungsbefehl in eine Kranfunktion, insbesondere Kranrüstfunktion, umgesetzt wird. Ein Kranmodul ist beispielsweise eine bewegliche, insbesondere antreibbare, Krankomponente, wie beispielsweise Fahrantriebe, insbesondere Radantriebe oder Raupenantriebe. Weitere Kranmodule können Drehantriebe für eine drehbare Bewegung eines Oberwagens gegenüber einem Unterwagen sein. Weitere Kranmodule sind insbesondere beispielsweise Seilwinden für ein Hebezeug und/oder zum Aufrichten von Auslegern, Hydraulikzylinder zum Aufrichten von Auslegern, Antriebe für Teleskopausleger, Antriebe für Abstützeinrichtungen, die insbesondere Hydraulikzylinderstützen aufweisen. Über einen Neigungssensor können die Hydraulikzylinderstützen auch zum Nivellieren des Krans genutzt werden.

Unter einem Kran sind in der Anmeldung alle Krantypen, insbesondere Fahrzeugkrane sowie Raupenkrane, zu verstehen.

In einer bevorzugten Ausführungsform weist das mobile Endgerät ein Anzeige- und Eingabemodul zum Darstellen der Anwendungssoftware und zur Eingabe eines Steuerungsbefehls auf. Das Anzeige- und Eingabemodul ist in dem mobilen Endgerät integriert. Die Eingabe des Steuerungsbefehls erfolgt über die auf dem Anzeige- und Eingabemodul dargestellte Anwendungssoftware durch den Kranbediener. Vorteilhafterweise ist das Anzeige- und Eingabemodul ein Display, insbesondere ein berührungsempfindliches Display, auf dem einerseits die Anwendungssoftware dargestellt wird und andererseits die Eingabe eines ausgewählten Steuerungsbefehls durch Berühren der Displayoberfläche durch einen Kranbediener erfolgt.

Ein Steuerungssystem gemäß Anspruch 2 stellt eine konstruktiv vorteilhafte Ausführungsform eines Steuerungssystems bereit. Insbesondere ist die Steuerungseinheit am Kran integriert.

Bei einem Steuerungssystem gemäß Anspruch 3 wird eine kosteneffiziente Signalverbindung bereitgestellt. Insbesondere ist die Funkschnittstelle als W-LAN-, Bluetooth- oder USB-Funkschnittstelle ausgeführt.

Bei einem Steuerungssystem gemäß Anspruch 4 wird eine effiziente Steuerung des Krans gewährleistet. Insbesondere ist das Empfangsmodul zum gleichzeitigen Empfangen mehrerer Steuerungsbefehle geeignet. Die Steuerungseinheit ist derart ausgeführt, dass mehrere, insbesondere gleichzeitig empfangene, Steuerungsbefehle zwischengespeichert und gemäß einer vorgebbaren, einstellbaren Reihenfolge abgearbeitet werden. Insbesondere wird die Reihenfolge anhand festlegbarer Prioritätskriterien festgelegt, um eine sinnvolle Bedienung des Krans zu gewährleisten. Beispielsweise ist klar, dass zum Abstützen des Kranunterwagens zunächst Stützträger entweder horizontal ausgefahren bzw. ausgeschwenkt werden müssen, bevor Stützzylinder zum Abstützen am Untergrund ausgefahren werden.

Bei einem Steuerungssystem gemäß Anspruch 5 wird ein universell einsetzbares mobiles Endgerät bereitgestellt. Smartphones oder Tablet-Computer sind weit verbreitet.

Bei einem Steuerungssystem gemäß Anspruch 6 oder 7 wird eine flexible Signalverbindung bereitgestellt. Insbesondere ist die Signalverbindung im Wesentlichen distanzunabhängig. Der Kranbediener kann sich mit dem mobilen Endgerät in einer größeren Entfernung zu dem Kran befinden.

Bei einem Steuerungssystem gemäß Anspruch 8 wird sichergestellt, dass der dem Kran zugeordnete Steuerungsbefehl identifiziert und umgesetzt wird. Insbesondere dient die Identifikationseinheit zum Identifizieren des mobilen Endgeräts, also des Kranbedieners, um auszuschließen, dass unberechtigte Dritte den Kran bedienen. Die Sicherheit des Kranbetriebs ist dadurch erhöht. Insbesondere ist die Identifikationseinheit in das Empfangsmodul der Steuerungseinheit integriert. Die Identifizierung kann beispielsweise über einen Eingabecode, eine Geräte-ID und /oder eine SIM-ID erfolgen.

Bei einem Steuerungssystem gemäß Anspruch 9 wird eine besonders vorteilhafte Ausführungsform des Kranmoduls bereitgestellt. Vorteilhafterweise ist das Stellelement beispielsweise als Antrieb und das Funktionselement beispielsweise als Winde ausgeführt.

Bei einem Steuerungssystem gemäß Anspruch 10 wird ein sicherer Kranbetrieb weiter verbessert. Insbesondere ist das mindestens eine Sensorelement zum Erfassen, beispielsweise der Temperatur, Druck, Geschwindigkeit oder Position des Kranmoduls, geeignet. Dadurch ist gewährleistet, dass die von dem Kranmodul ausgeführte Kranfunktion unmittelbar überwacht werden kann. Das Sensorelement ist insbesondere mit der Steuerungseinheit in Signalverbindung. Insbesondere ist die Steuerungseinheit zur Rückübertragung von Informationen mit dem mobilen Endgerät in Signalverbindung, so dass insbesondere eine Überwachungsanzeige unmittelbar am mobilen Endgerät zur Darstellung der Überwachungsfunktion am mobilen Endgerät vorgesehen sein kann. Beispielsweise können Temperatur, Druck, Geschwindigkeit oder Position des Kranmoduls am mobilen Endgerät angezeigt werden.

Vorteilhafterweise können die von dem mindestens einem Sensorelement erfassten Daten an das mobile Endgerät übertragen werden.

Bei einem Steuerungssystem gemäß Anspruch 11 wird ein besonders effizientes Steuerungssystem bereitgestellt.

Eine weitere Aufgabe der vorliegenden Erfindung besteht darin, einen Kran mit einem Steuerungssystem bereitzustellen.

Diese Aufgabe wird mit den Merkmalen des Anspruchs 12 gelöst. Hierdurch wird ein besonders unkompliziert zu bedienender Kran bereitgestellt.

Eine weitere Aufgabe der vorliegenden Erfindung besteht darin, ein verbessertes Verfahren zum Steuern eines Krans bereitzustellen.

Diese Aufgabe wird durch ein Verfahren gemäß Anspruch 13 gelöst. Bei dem erfindungsgemäßen Verfahren wurde erkannt, dass beim Eingeben eines Steuerungsbefehls mittels einer Anwendungssoftware auf ein mobiles Endgerät die Bedienperson nicht an einen Bedienplatz gebunden ist, so dass die Bedienperson einen optimalen Bedienplatz aufsuchen kann, wodurch die Sicherheit des Kranbetriebes erhöht wird. Vorzugsweise erfolgt die Eingabe des Steuerungsbefehls über bereitgestellte Bedien- und Auswahlmenüs der Anwendungssoftware. Vorteilhafterweise wird mindestens ein Steuerungsbefehl durch Auswahl mindestens eines Bedien- und Auswahlmenüs eingegeben. Die Auswahl erfolgt bevorzugt durch Berühren der dargestellten Bedien- und Auswahlmenüs und/oder durch Spracheingabe des Steuerungsbefehls. Auch eine Gestensteuerung ist denkbar, sodass ein Steuerungssignal erzeugt wird, wenn die Bedienperson eine erforderliche Geste durchgeführt hat.
Bei einem Verfahren gemäß Anspruch 14 wird sichergestellt, dass nur befugte Personen den Kran steuern können. Insbesondere erfolgt eine Sicherheitsabfrage in Form einer Identifikation des mobilen Endgeräts und/oder einer Identifikation einer das mobile Endgerät bedienenden Person.

Vorteilhafterweise erfolgt die Identifikation durch Eingabe einer Identifikationsnummer oder eines PINs, und/oder durch Scannen eines QR-Codes oder eines Barcodes. Es ist auch möglich, dass das mobile Endgerät automatisch, beispielsweise anhand der Seriennummer und/oder einer SIM-ID erkannt wird.

Bei einem Verfahren gemäß Anspruch 15 wird ein besonders vorteilhaftes Verfahren zum Steuern eines Krans bereitgestellt. Insbesondere umfasst das Ausführen des Steuerungsbefehls das Umsetzen in eine Kranrüstfunktion.

Vorteilhafterweise ist das mindestens eine Sensorelement dazu geeignet, das Umsetzen des Steuerungsbefehls in eine Kranfunktion zu überwachen.

Ein Ausführungsbeispiel der Erfindung wird nachfolgend anhand der Zeichnung näher erläutert. In dieser zeigt:

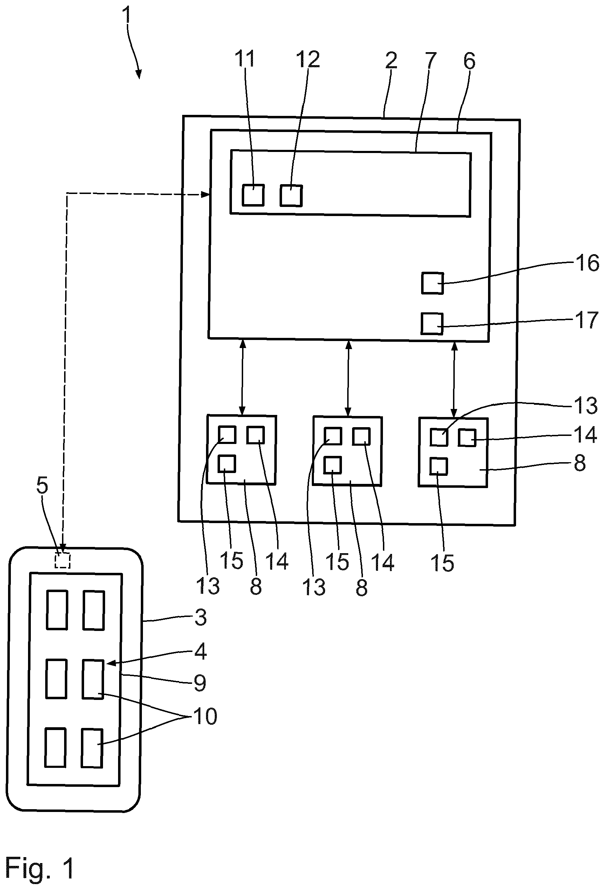

- Fig. 1: eine schematische Darstellung eines Steuerungssystems.
Ein in Fig. 1 schematisch dargestelltes Steuerungssystem 1 dient zum ferngesteuerten Bedienen eines schematisch dargestellten Krans 2. Das Steuerungssystem 1 umfasst ein mobiles Endgerät 3 mit einer vorinstallierten Anwendungssoftware 4 und einem Sendemodul 5. Das mobile Endgerät 3 ist über eine drahtlose Signalverbindung mit einem Empfangsmodul 7 einer Steuerungseinheit 6 des Kranes 2 in Kommunikationsverbindung bringbar. Die Kommunikationsverbindung ist bidirektional und ermöglicht eine Kommunikation von dem Sendemodul 5 des mobilen Endgeräts 3 zu dem Empfangsmodul 7 der Steuerungseinheit 6 und umgekehrt. Die Steuerungseinheit 6 ist an dem Kran 2 angeordnet, insbesondere in dem Kran 2 integriert. Die Steuerungseinheit 6 steht in Signalverbindung mit mindestens einem Kranmodul 8.

Das mobile Endgerät 3 ist beispielsweise als Smartphone oder Tablet-Computer ausgeführt. Das mobile Endgerät 3 umfasst eine Anzeige 9 in Form eines Displays, insbesondere ein berührungsempfindliches Display, zum Darstellen der Anwendungssoftware 4. Die Anwendungssoftware 4 umfasst mehrere Bedien- und Auswahlmenüs 10 zum Selektieren zumindest eines Steuerungsbefehls. Die Selektion eines Steuerungsbefehls kann auch sprachgesteuert erfolgen. Die Bedien- und Auswahlmenüs 10 sind beispielsweise zur Anzeige der Lage und/oder Position zumindest eines Kranmoduls 8 und/oder zum Auswählen zumindest einer Betriebsart, wie beispielsweise Fahrmodus, Hebe-/Senkmodus, geeignet. Je nach Auswahl ein oder mehrerer Bedien- und Auswahlmenüs 10 wird zumindest ein Steuerungsbefehl zur Auswahl bereitgestellt. Vorteilhafterweise werden die Bedien- und Auswahlmenüs 10 als grafische Symbole dargestellt, so dass die Anwendungssoftware 4 übersichtlich gestaltet ist und intuitiv bedient werden kann, wodurch der Bedienkomfort weiter verbessert wird. Durch Berühren des Displays 9 auf dem das Bedien- und Auswahlmenü 10 angezeigt wird, wird der mindestens eine Steuerungsbefehls ausgewählt. Der zumindest eine über die Anwendungssoftware 4 ausgewählte Steuerungsbefehl wird durch das Sendemodul 5 an das Empfangsmodul 7 übermittelt. Das Sendemodul 5 ist auch zum Empfangen von Daten geeignet. Das mobile Endgerät 3 ist zur Internetverbindung, insbesondere zur mobilen Datennetzverbindung, geeignet.

Das Empfangsmodul 7 ist in der Steuerungseinheit 6 integriert. Alternativ kann das Empfangsmodul 7 auch getrennt von der Steuerungseinheit 6 ausgeführt sein. In diesem Fall würde das Empfangsmodul 7 über einen Daten-Bus mit der Steuerungseinheit 6 in Kommunikationsverbindung stehen. Das Empfangsmodul 7 ist zum Empfangen zumindest eines Steuerungsbefehls geeignet. Vorzugsweise ist das Empfangsmodul 7 zum gleichzeitigen Empfangen mehrerer Steuerungsbefehle geeignet. Das Empfangsmodul ist zur Internetverbindung, insbesondere zur mobilen Internetverbindung, geeignet. Das Empfangsmodul 7 weist eine Funkschnittstelle 11 auf. Die Funkschnittstelle 11 ist als W-LAN- oder Mobilfunk- und/oder Bluetooth- oder USB-Funkschnittstelle ausgeführt. Ist die Funkschnittstelle 11 als W-LAN- oder als Mobilfunkschnittstelle ausgeführt, kann das Empfangsmodul 7 eine Internetverbindung, insbesondere eine mobile Internetverbindung, herstellen. Ist die Funkschnittstelle 11 als Bluetooth- oder USB-Schnittstelle ausgeführt, kann das Empfangsmodul mit einem lokalen Netzwerk verbunden werden. Das Empfangsmodul 7 ist vorzugsweise dazu geeignet, Daten an das mobile Endgerät 3 zu senden.

Weiter umfasst das Empfangsmodul 7 eine Identifikationseinheit 12 zum Identifizieren des Steuerungsbefehls sowie zur Identifikation des mobilen Endgeräts 3 und/oder zur Identifikation einer das mobile Endgerät 3 bedienenden Person. Das Identifikationsmodul ist in dem Empfangsmodul integriert. Die Identifizierung eines Steuerungsbefehls kann beispielsweise über einen Eingabecode, eine Geräte-ID und/oder eine SIM-ID erfolgen. Die Identifikation einer das mobile Endgerät 3 bedienenden Person kann durch Eingabe einer Identifikationsnummer oder eines PINs und/oder durch Scannen eines QR-Codes oder eines Barcodes erfolgen.

Die Steuerungseinheit 6 steht über einen CAN-Bus mit zumindest einem Kranmodul 8 in Kommunikationsverbindung. Die Kommunikationsverbindung ist bidirektional. Ein Kranmodul 8 umfasst ein Stellelement 13 und ein Funktionselement 14, die die Steuerungsbefehle in eine Kranfunktion, insbesondere Kranrüstfunktion, umsetzen. Weiter weist das Kranmodul 8 mindestens ein Sensorelement 15 zum Erfassen beispielsweise der Temperatur, Druck, Geschwindigkeit, Lage und/oder Position des Kranmoduls 8 auf. Durch die Signalverbindung des zumindest einen Sensorelements 15 mit der Steuerungseinheit 6 wird der jeweils aktuelle Zustand des Kranmoduls 8 an die Steuerungseinheit 6 übertragen. Durch die Summe der Zustände der einzelnen Kranmodule 8 kann der Betriebszustand des Krans 2 ermittelt werden. Sowohl die Einzelzustände der Kranmodule 8 als auch der Betriebszustand des Krans 2 können an das mobile Endgerät 3 gesendet und durch die Anwendungssoftware 4 angezeigt werden. Zur Datenverarbeitung sind in der Steuerungseinheit 6 ein Steuer-/Regelelement 16 und ein Speicherelement 17 vorgesehen.

Im Folgenden wird ein Verfahren zum Bedienen des Steuerungssystems 1 näher erläutert. Zunächst wird eine drahtlose Signalverbindung zwischen dem mobilen Endgerät 3 und der Steuerungseinheit 6 des Krans 2 bereitgestellt. Die drahtlose Signalverbindung wird vorzugsweise über das Internet, insbesondere über das mobile Internet, bereitgestellt. Hierzu ist es erforderlich, dass die Anwendungssoftware 4 mit der Steuerungseinheit 6 synchronisiert wird. Dies erfolgt vorzugsweise durch Eingabe einer Identifikationsnummer oder eines PINs oder durch Einscannen eines QR-Codes oder Barcodes beim Start der Anwendungssoftware 4. Zum Eingeben eines Steuerungsbefehls mittels der Anwendungssoftware 4 werden mehrere Bedien- und Auswahlmenüs 10 bereitgestellt. Durch Auswählen ein oder mehrerer Bedien- und Auswahlmenüs 10 können ein oder mehrere Steuerungsbefehle ausgewählt werden. Der zumindest eine Steuerungsbefehl wird durch das Sendemodul 5 an das Empfangsmodul 7 drahtlos übertragen. Vorzugsweise erfolgt die Übertragung über das Internet, insbesondere über das mobile Internet. Anschließend wird der Steuerungsbefehl durch das Steuer-/Regelelement 16 und das Speicherelement 17 der Steuerungseinheit 6 verarbeitet. Anschließend wird der jeweilige Steuerungsbefehl von der Steuerungseinheit 6 an das jeweilige Kranmodul 8 weitergeleitet. Daraufhin setzt das Stellelement 13 und das Funktionselement 14 des Kranmoduls 8 den Steuerungsbefehl in eine Kranfunktion, insbesondere Kranrüstfunktion, um.

Vorteilhafterweise erfolgt vor Ausführung des Steuerungsbefehls eine Sicherheitsabfrage, insbesondere in Form einer Identifikation des mobilen Endgeräts 3 und/oder einer Identifikation einer das mobile Endgerät 3 bedienenden Person. Zur Freigabe des Steuerungsbefehls ist eine Eingabe einer Identifikationsnummer oder eines PINs erforderlich. Die Eingabe erfolgt über die Anwendungssoftware 4.

Zur Überwachung der Umsetzung des Steuerungsbefehls in eine Kranfunktion, insbesondere Kranrüstfunktion, kann die Steuerungseinheit 6 eine Kran-Ist-Konfiguration erfassen. Dies erfolgt insbesondere dadurch, dass der Betriebszustand des Krans 2 erfasst wird. Der Betriebszustand des Krans 2 berücksichtigt insbesondere die Kriterien wie Lage und Position der Kranmodule 8 sowie Betriebsart des Krans 2, wie beispielsweise Fahrmodus, Hebe-/Senkmodus, Drehmodus oder andere Modi. Die Lage und/oder Position der Kranmodule 8 kann in der Anwendungssoftware 4 dargestellt werden.

Es ist auch möglich, dass Grenzwerte für ausgewählte Betriebszustände der Kranmodule 8 in dem Speicherelement 17 der Steuerungseinheit 6 hinterlegt werden, die mit der Kran-Ist-Konfiguration abgeglichen werden. Sollte sich die Kran-Ist-Konfiguration zumindest einem Grenzwert nähern, wird ein Warnhinweis an die Anwendungssoftware 4 übermittelt und dargestellt werden, woraufhin die Bedienperson entsprechend reagieren kann. Der Warnhinweis kann visuell oder akustisch erfolgen. Bei Erreichen oder Überschreiten des Grenzwertes wird die Ausführung des Steuerungsbefehls automatisch beendet. Hierdurch wird die Sicherheit des Kranbetriebes weiter verbessert.

Das Steuerungssystem 1, insbesondere das mobile Endgerät 3, ermöglicht einen flexiblen kranunabhängigen Einsatz. Hierdurch kann auf herstellerspezifische Fernbedienungen verzichtet werden. Insbesondere ist es nicht erforderlich, dass die Hardware umkonfiguriert oder Software umprogrammiert werden muss. Vorteilhafterweise umfasst das Empfangsmodul 7 eine Standardschnittstelle zur Verbindung mit der Steuerungseinheit 6.

## Patentansprüche

1. Steuerungssystem für einen Kran (2) umfassend
a. ein mobiles Endgerät (3) mit einer vorinstallierten Anwendungssoftware (4) zum Eingeben eines Steuerungsbefehls für einen Kran (2) und einem Sendemodul (5) zum Senden des Steuerungsbefehls,
b. eine Steuerungseinheit (6) mit einem Empfangsmodul (7), das zum Empfangen des Steuerungsbefehls geeignet ist und mit dem mobilen Endgerät (3) in Signalverbindung bringbar ist, wobei die Signalverbindung drahtlos ist,
c. mindestens ein mit der Steuerungseinheit (6) in Signalverbindung stehendes Kranmodul (8) zum Ausführen des Steuerungsbefehls.

2. Steuerungssystem gemäß Anspruch 1, **dadurch gekennzeichnet, dass** die Steuerungseinheit (6) am Kran (2) angeordnet, insbesondere am Kran (2) integriert, ist.

3. Steuerungssystem gemäß einem der vorstehenden Ansprüche, **dadurch gekennzeichnet, dass** das Empfangsmodul (7) eine Funkschnittstelle (11) aufweist, die insbesondere als W-LAN-, Mobil-, Bluetooth- oder USB-Funkschnittstelle ausgeführt ist.

4. Steuerungssystem gemäß einem der vorstehenden Ansprüche, **dadurch gekennzeichnet, dass** das Empfangsmodul (7) zum Empfangen mehrerer Steuerungsbefehle, insbesondere gleichzeitig, geeignet ist.

5. Steuerungssystem gemäß einem der vorstehenden Ansprüche, **dadurch gekennzeichnet, dass** das mobile Endgerät (3) als Smartphone oder als Tablet-Computer ausgeführt ist.

6. Steuerungssystem gemäß einem der vorstehenden Ansprüche, **dadurch gekennzeichnet, dass** das mobile Endgerät (3) zur Internetverbindung, insbesondere zur mobilen Internetverbindung, geeignet ist.

7. Steuerungssystem gemäß einem der vorstehenden Ansprüche, **dadurch gekennzeichnet, dass** das Empfangsmodul (7) zur Internetverbindung, insbesondere zur mobilen Internetverbindung, geeignet ist.

8. Steuerungssystem gemäß einem der vorstehenden Ansprüche, **gekennzeichnet durch** eine Identifikationseinheit (12), die insbesondere in das Empfangsmodul (7) der Steuerungseinheit (6) integriert ist, zum Identifizieren des Steuerungsbefehls.

9. Steuerungssystem gemäß einem der vorstehenden Ansprüche, **dadurch gekennzeichnet, dass** das mindestens eine Kranmodul (8) ein Stellelement (13) und ein Funktionselement (14) aufweist.

10. Steuerungssystem gemäß einem der vorstehenden Ansprüche, **dadurch gekennzeichnet, dass** das mindestens eine Kranmodul (8) ein Sensorelement (15) aufweist.

11. Steuerungssystem gemäß einem der vorstehenden Ansprüche, **dadurch gekennzeichnet, dass** die Signalverbindung zwischen der Steuerungseinheit (6) und dem mindestens einen Kranmodul (8) als CAN-BUS ausgeführt ist.

12. Kran mit einem Steuerungssystem gemäß einem der vorstehenden Ansprüche.

13. Verfahren zum Steuern eines Krans umfassend die Verfahrensschritte:
- Eingeben eines Steuerungsbefehls mittels einer Anwendungssoftware (4) auf ein mobiles Endgerät (3),
- Übermitteln des Steuerungsbefehls vom mobilen Endgerät (3) an eine Steuerungseinheit (6),
- Empfangen des Steuerungsbefehls mittels eines Empfangsmoduls (7) der Steuerungseinheit (6),
- Ausführen des Steuerungsbefehls mittels mindestens eines mit der Steuerungseinheit (6) in Signalverbindung stehenden Kranmoduls (8).

14. Verfahren gemäß Anspruch 12, **dadurch gekennzeichnet, dass** vor dem Ausführen des Steuerungsbefehls eine Sicherheitsabfrage erfolgt, insbesondere durch Identifikation des mobilen Endgeräts (3) und/oder einer das mobile Endgerät (3) bedienenden Person.

15. Verfahren gemäß Anspruch 13 oder 14, **dadurch gekennzeichnet, dass** das Ausführen des Steuerungsbefehls das Umsetzen in eine Kranfunktion, insbesondere eine Kranrüstfunktion, umfasst.
